# EUROPEAN PATENT APPLICATION

(11) **EP 1 691 349 A2**
(43) Date of publication of application: **16.08.2006**
(21) Application number: 05257162.7
(22) Date of filing: 21.11.2005
(51) Int. Cl.: G11B 5/39, G11B 5/33, G11B 5/31, G11B 5/11

(54) **Probe head and method of fabricating the same**

(30) Priority: 14.02.2005 KR 2005011915
(71) Applicant: Samsung Electronics Co., Ltd., Suwon-si, Gyeonggi-Do (KR)
(72) Inventor: Nam, Yun-woo 812-1706 Sinjeong Maeul, Yongin-si, Gyeonggi-do (KR); Kim, Yong-su, Seoul (KR)
(74) Representative: Greene, Simon Kenneth

(57) **Abstract**

Provided is a probe head (100) and a method of fabricating the same. The probe head (100) includes a sensor unit having: as sensor (140) which records or reads data on or from a predetermined medium (200); first (120) and second (180) shields disposed on both sides of the sensor (140) at a predetermined distance from each other; and first (130) and second (150,170) intermediate layers respectively interposed between the sensor (140) and the first shield (120), and the sensor (140) and the second shield (180). The method includes: providing a substrate (101); forming an insulating layer (110) on the substrate; forming a first shield (120) on the insulating layer (110); forming a first intermediate layer (130) on the first shield (120); forming a sensor (140) on the first intermediate layer (130); forming a second intermediate layer (150,170) on the sensor; forming a second shield (180) on the second intermediate layer (150,170); and forming a protective layer (190) on the second shield (180). Accordingly, the resolving ability and sensitivity of the probe head (100) can be simultaneously improved, and the probe head (100) can be easily manufactured.

## Description

### BACKGROUND OF THE INVENTION

The present invention relates to a probe head and a method of fabricating the same, and more particularly, to a probe head having a high resolving ability, and a method of fabricating the same

Probe heads record/read data on/from a recording medium by contacting the recording medium. Such probe heads need to have an excellent resolving ability to increase readability of data.

Numerous types of such probe heads have been introduced, examples of the most widely used including a field effect transistor (FEF) probe head, a resistive probe head, and an EFM probe head.

However, the sensitivity and resolving ability of these probe heads is not sufficient to accurately record/read data on/from a recording medium. Therefore, there is a need for an improved probe head having high sensitivity and resolving ability to accurately record/read data on/from a recording medium. In addition, a method of fabricating this type of probe head is also required.

### SUMMARY OF THE INVENTION

According to an aspect of the present invention, there is provided a probe head including at least one sensor unit, the sensor unit having: a sensor which records or reads data on or from a predetermined medium; first and second shields disposed on both sides of the sensor at a predetermined distance from each other; and first and second intermediate layers respectively interposed between the sensor and the first shield, and the sensor and the second shield.

A surface of the sensor facing the recording medium may be flat.

The first and second shields may be mutually connected.

When operating the probe head, one of the first shield or the second shield may be grounded.

The sensor unit may further include: a substrate which supports the sensor; and an insulating layer which insulates a shield facing the substrate.

The sensor unit may further include a protective layer which covers the second shield.

The sensor unit may further include a metal layer which connects the sensor to a power source.

According to another aspect of the present invention, there is provided a method of fabricating a probe head. The method includes: providing a substrate; forming an insulating layer on the substrate; forming a first shield on the insulating layer; forming a first intermediate layer on the first shield; forming a sensor on the first intermediate layer; forming a second intermediate layer on the sensor; forming a second shield on the second intermediate layer; and forming a protective layer on the second shield.

The method may further include forming a metal layer which connects the sensor to a power source.

The forming of the metal layer may include: forming the metal layer on the second intermediate layer; and forming a third intermediate layer on the metal layer.

The forming of the metal layer may include: forming a thin layer by depositing a predetermined metal on the second intermediate layer; and patterning the thin layer.

The forming of the thin layer by depositing the predetermined metal on the second intermediate layer may be performed by electronic beam deposition or sputtering.

The patterning of the thin layer may be performed by reactive ion etching (RIE) or wet etching.

The forming of the insulating layer may be performed by thermal oxidation.

The forming of the first shield and the forming of the second shield may include: forming a thin layer by depositing a predetermined metal; and patterning the thin layer.

The forming of the thin layer by depositing the predetermined metal may be performed by electronic beam deposition or sputtering.

The patterning of the thin layer may be performed by RIE or wet etching.

The forming of the first intermediate layer, the forming of the second intermediate layer, and the forming of the protective layer may include: forming a thin layer by depositing oxide or nitride; and patterning the thin layer.

The forming of the thin layer by depositing oxide or nitride may be performed by plasma enhanced chemical vapor deposition (PECVD).

The patterning of the thin layer may be performed by RIE or wet etching.

The forming of the sensor may include: forming a thin layer by deposing Poly-Si; and patterning the thin layer.

The forming of the thin layer by depositing Poly-Si may be performed by low pressure chemical vapor deposition (LPCVD).

The patterning of the thin film may be performed by RIE or wet etching.

The method may further include dicing the probe head so that the sensor, the first shield, and the second shield are exposed to the outside.

The present invention provides an improved probe head that can increase sensitivity and resolving ability of a probe, and a method of fabricating the probe head.

The resolving ability and sensitivity of the probe head according to the present invention can be simultaneously improved by controlling the width of a surface of a sensor facing a recording medium, and the distance between the sensor and a first shield, and the sensor and a second shield.

In addition, the probe head having high resolving ability and sensitivity can be easily manufactured using the method described above.

### BRIEF DESCRIPTION OF THE DRAWINGS

The above and other features and advantages of the present invention will become more apparent by describing in detail exemplary embodiments thereof with reference to the attached drawings in which:
FIG. 1 is a plane view of a probe head according to an embodiment of the present invention;
FIG. 2A is a cross-section of the probe head of FIG. 1 taken along line B-B';
FIG. 2B is a cross-section of the probe head of FIG. 1 taken along line A-A';
FIGS. 3A, 4A, 5A, 6A, 7A, 8A, 9A, 10A, 11A, 12A, and 13A illustrate a method of fabricating the probe head illustrated in FIG. 1 along the line B-B'; and
FIGS. 3B, 4B, 5B, 6B, 7B, 8B, 9B, 10B, 11 B, 12B, and 13B illustrate a method of fabricating the probe head illustrated in FIG. 1 along the line A-A'.

### DETAILED DESCRIPTION OF THE INVENTION

A probe head and a method of fabricating the same according to the present invention will now be described more fully with reference to the accompanying drawings, in which exemplary embodiments of the invention are shown. In the drawings, the thicknesses of layers and regions are exaggerated for clarity. It will also be understood that when a layer is referred to as being "on" another layer or substrate, it can be directly on the other layer or substrate, or intervening layers may also be present.

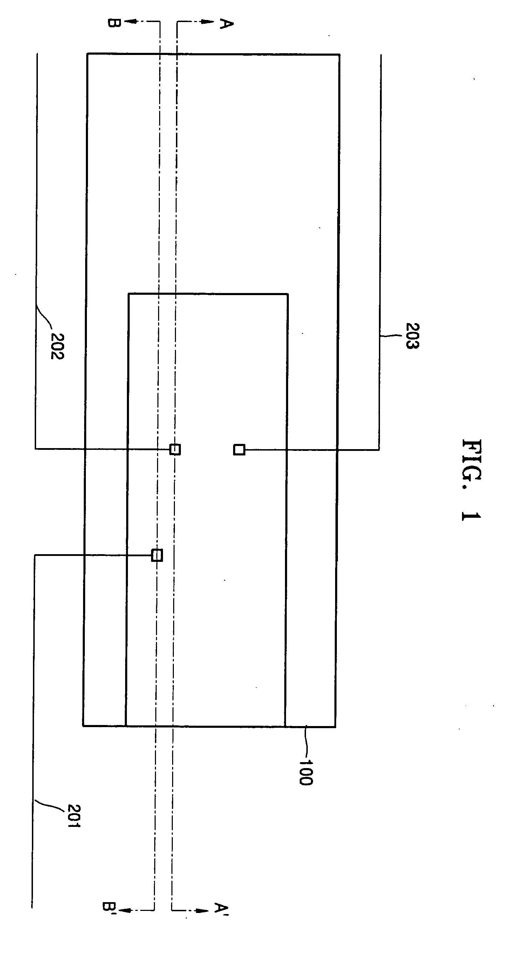

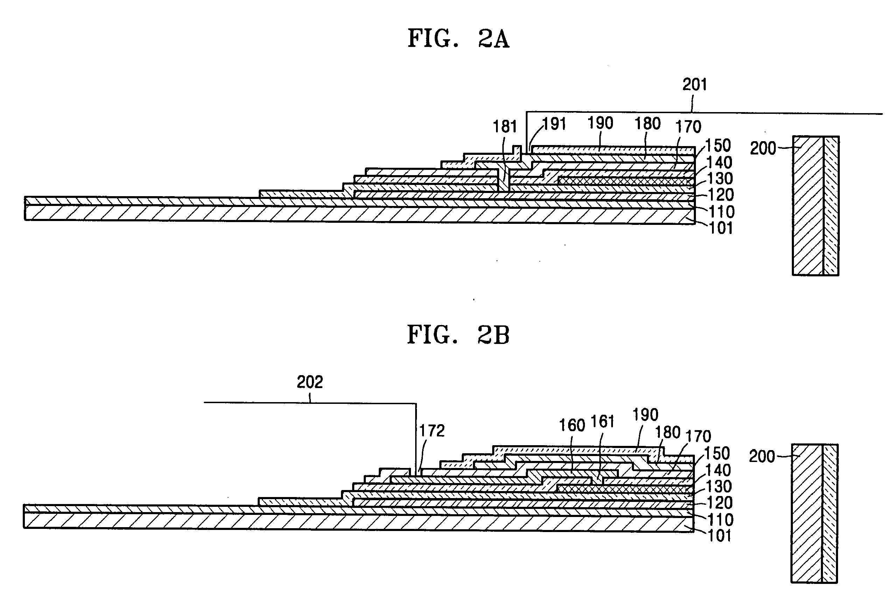

FIG. 1 is a plane view of a probe head 100 according to an embodiment of the present invention, FIG. 2A is a cross-section of the probe head 100 of FIG. 1 taken along line B-B', and FIG. 2B is a cross-section of the probe head 100 of FIG. 1 taken along line A-A'.

Referring to FIGS. 1, 2A, and 2B, the probe head 100 includes at least one sensor unit. The sensor unit includes a sensor 140 which records data on a predetermined recording medium 200 and reproduces the data from the recording medium 200, and a first shield 120 and a second shield 180 disposed on both ends of the sensor 140 with a predetermined distance between then. The sensor 140 can be made of Poly-Si. Preferably, the second shield 180 is connected to the first shield 120 via a shield connector 181.

The probe head 100 is supported by a substrate 101. An insulating layer 110 is formed between the substrate 101 and the first shield 120 to insulate the substrate 101 and the first shield 120, a first intermediate layer 130 is formed between the first shield 120 and the sensor 140, and a second intermediate layer, composed of an upper layer 150 and a lower layer 170, is formed between the sensor 140 and the second shield 180. The first intermediate layer 130 and the second intermediate layer can be made of a predetermined oxide or nitride.

In addition, a protective layer 190 which protects the second shield 180 is formed in the probe head 100. The second shield 180 is grounded by a predetermined leading wire 201. A hole 191 is formed on the protective layer 190 so that the predetermined leading wire 201 can be connected to the second shield 180. The protective layer 190 can be made of a predetermined oxide or nitride.

Furthermore, a metal layer 160 is formed in the probe head 100 to connect the sensor 140 to a power. The metal layer 160 is preferably disposed between the lower layer 150 of the second intermediate layer and the upper layer 170 of the second intermediate layer for insulation. The metal layer 160 is connected to the sensor 140 via a sensor connector 161, and is connected to the power via predetermined leading wires 202 and 203. By being configured as described above, the sensor 140 is connected to the power via the metal layer 160. Reference number 172 denotes a hole for connecting the leading wires 202 and 203 to the metal layer 160, and only the leading wire 202 is connected to the metal layer 160 as an example in FIG. 2B.

According to the present embodiment, a surface of the sensor 140 facing the recording medium 200 has a predetermined width, and sides of the sensor 140 are formed perpendicular to the surface. The sensor 140 and the first shield 120, and the sensor 140 and the second shield 180 are separated by a predetermined distance. In an experiment, the reproducing voltage of the probe head 100 increased when the width of the sensor 140 decreased, and also when the distances between the sensor 140 and the first shield 120 and the sensor 140 and the second shield 180 decreased. Therefore, according to the present embodiment, the sensitivity and the analysing ability of the probe head 100 can be simultaneously increased.

Methods of fabricating the probe head 100 will be described below.

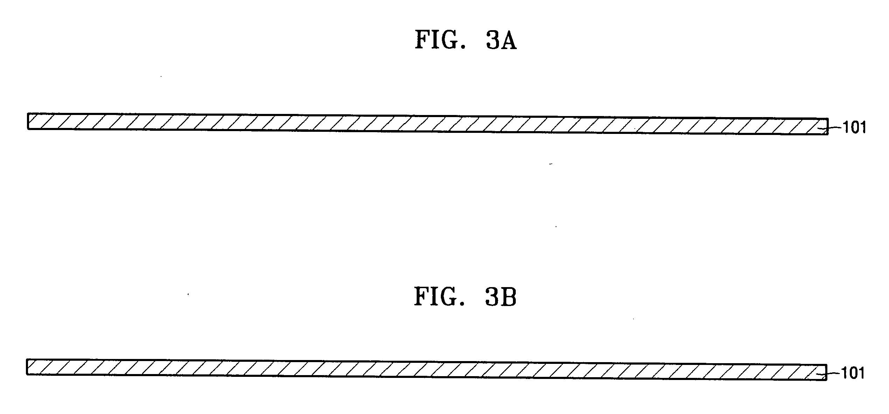

FIGS. 3A, 4A, 5A, 6A, 7A, 8A, 9A, 10A, 11A, 12A, and 13A illustrate a method of fabricating the probe head 100 along the line B-B', and FIGS. 3B, 4B, 5B, 6B, 7B, 8B, 9B, 10B, 11 B, 12B, and 13B illustrate a method of fabricating the probe head 100 along the line A-A'.

First, as illustrated in FIGS.3A and 3B, the substrate 101 is provided. The substrate can be made of Si.

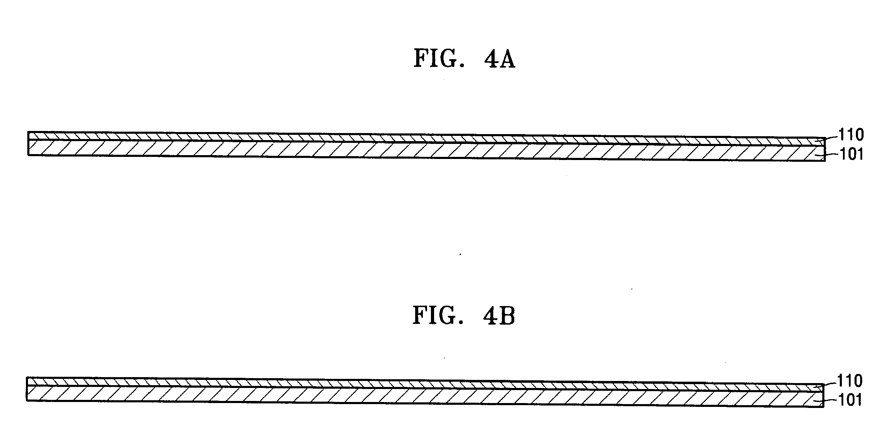

Then, as illustrated in FIGS. 4A and 4B, the insulating layer 110 is formed on the substrate 101. The formation of the insulating layer 110 can be performed by thermal oxidation. Through such process, the insulating layer 110 can be formed to a thickness of several tens of µm.

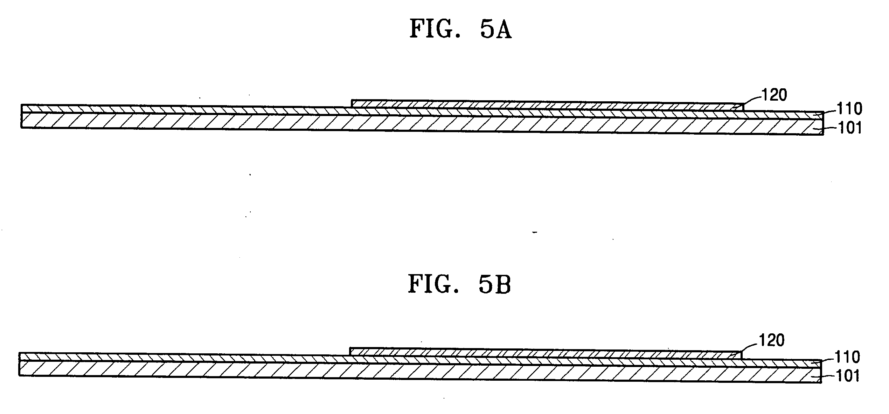

Next, as illustrated in FIGS. 5B and 5B, the first shield 120 is formed on the insulating layer 110. After forming a thin layer by depositing a predetermined metal making up the first shield 120 on the insulting layer 110, the thin layer is patternized, thereby forming the first shield 120. Here, the formation of the thin layer can be performed by electronic beam deposition or sputtering. Also, the patterning of the thin layer can be formed by reactive ion etching (RIE) or wet etching. The metal which makes up the first shield 120 can be Au, Pt, or Pd. Through such process, the first shield 120 can be formed to a thickness of several tens of µm, preferably below 50 µm.

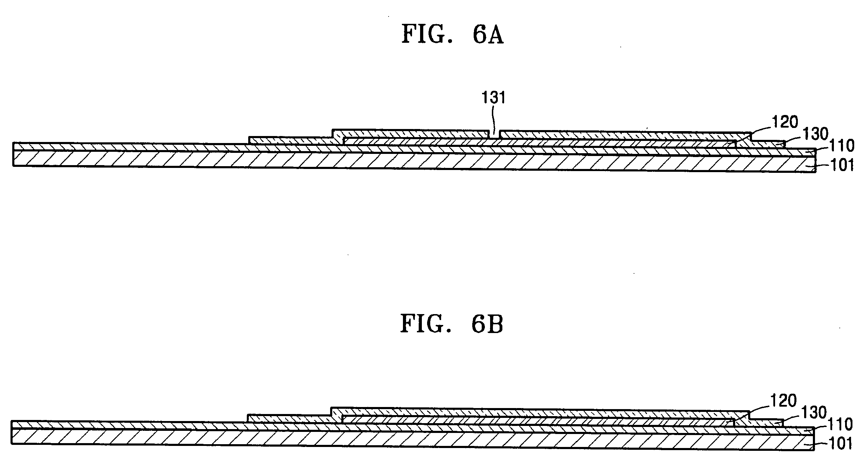

As illustrated in FIGS. 6A and 6B, the first intermediate layer 130 is formed on the first shield 120. The hole 131 through which the shield connector 181 passes is formed in the intermediate layer 130 to connect the second shield 180 and the first shield 120 as illustrated in FIG. 6A.

The first intermediate layer 130 is formed by forming the thin layer by depositing oxide or nitride that make up the first intermediate layer 130 and then patterning the thin layer. Here, the formation of the thin layer can be performed by plasma enhanced chemical vapor deposition (PECVD). Also, the pattering of the thin layer can be performed by RIE or wet etching. Through such process, the thickness of the first intermediate layer 130 can be formed to be a number of µm thick, preferably below 10 µm.

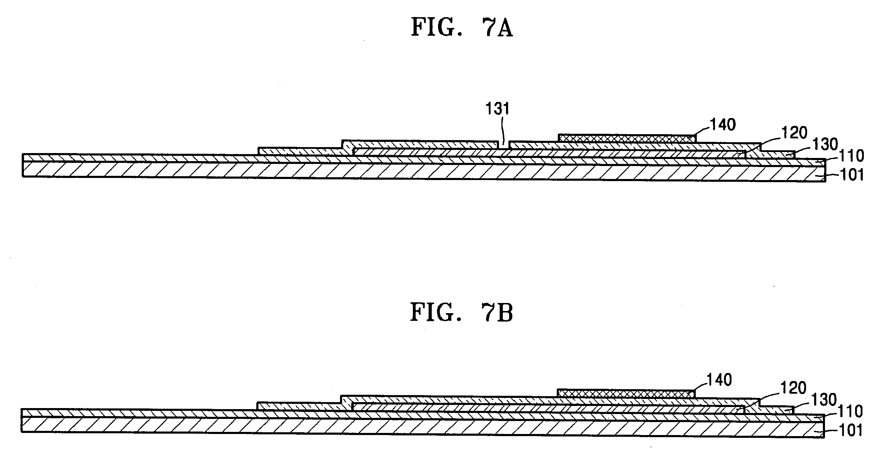

Then, as illustrated in FIGS. 7A and 7B, the sensor 140 is formed on the first intermediate layer 130. The Poly-Si composing the sensor 140 is deposited on the first intermediate layer 130 to form the thin layer, and then by patterning the thin layer, the sensor 140 is formed. Here, the formation of such thin layer can be performed by low pressure chemical vapor deposition (LPCVD). Also, the patterning of the thin layer can be performed by RIE or wet etching.

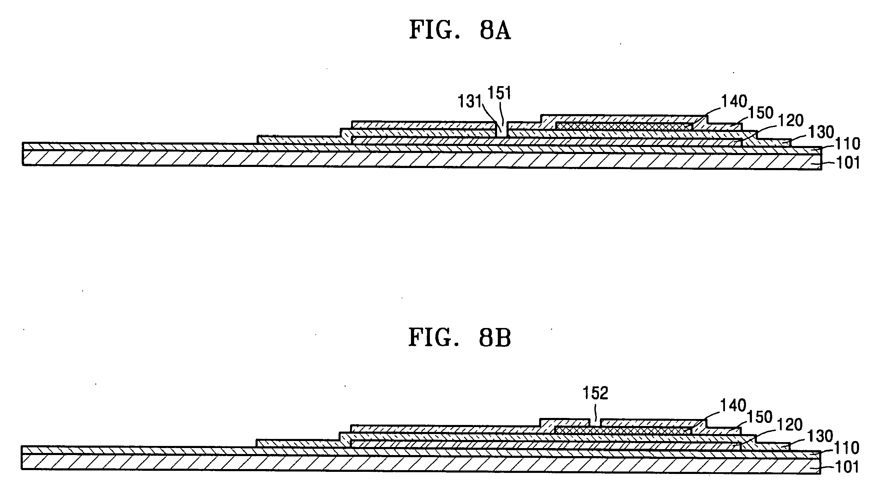

Next, as illustrated in FIGS. 8A and 8B, the lower layer 150 of the second intermediate layer is formed on the sensor 140. Here, as illustrated in FIG. 8A, a hole 151 corresponding to the hole 131 formed on the first insulating layer is formed on the lower layer 150 of the second intermediate layer so that the shield connecter 181 can pass through the hole 151. Also, as illustrated in FIG. 8B, a hole 152 through which the connector 161 passes is formed in the lower layer 150 of the second intermediate layer, to connect the metal layer 160 and the sensor 140.

The lower layer 150 of the second intermediate layer can be formed by the same method as the first intermediate layer 120. Through such process, the lower layer 150 of the second intermediate layer can be formed to a thickness of several tens of µm, preferably below 10 µm.

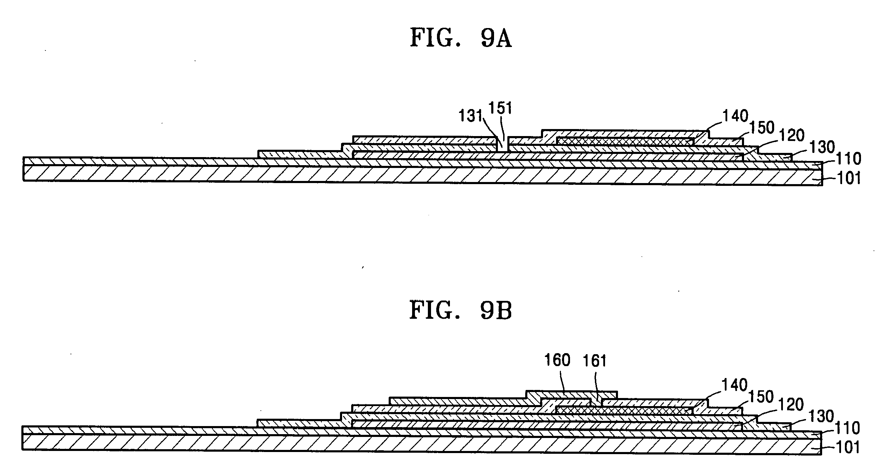

Then, as illustrated in FIGS. 9A and 9B, the metal layer 160 is formed on the lower layer 150 of the second intermediate layer. The metal layer 160 is for connecting the sensor 140 to a power source. In FIG. 9A, the metal layer 160 is not formed, but the metal layer 160 is formed in FIG. 9B. The sensor connector 161, which is an extension of a portion of the metal layer 160, is connected to the sensor 140 via the hole 152 formed on the lower layer 150 of the second intermediate layer.

The predetermined metal for forming the metal layer 160 is deposited on the lower layer 150 of the second intermediate layer to form the thin layer, and by patterning the thin layer, the metal layer 160 is formed. Here, the formation of the thin layer can be performed by electronic beam deposition or sputtering, and the patterning of the thin layer can be performed by RIE or wet etching.

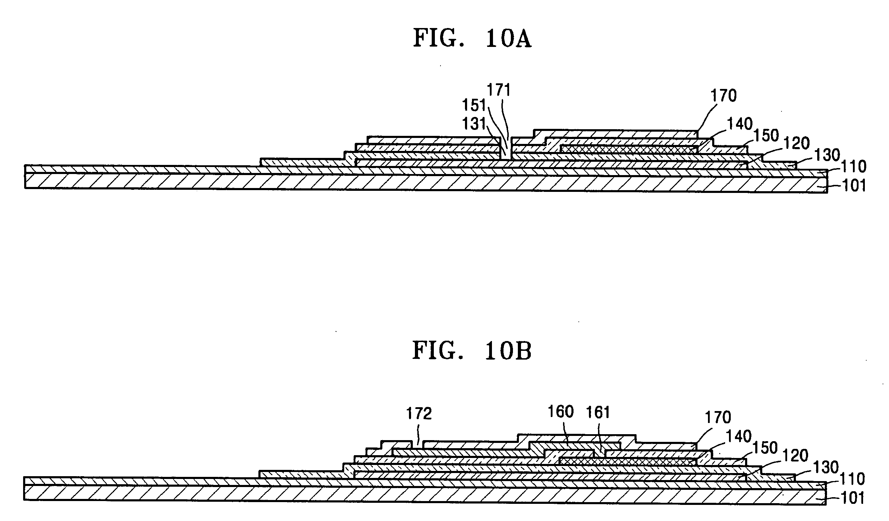

Then, as illustrated in FIGS. 10A and 10B, the upper layer 170 of the second intermediate layer is formed on the lower layer 150 of the second intermediate layer and the metal layer 160. The upper layer 170 of the second intermediate layer forms the second intermediate layer together with the lower layer 150 of the second intermediate layer. As shown in FIG. 10A, a hole 171 is formed on the upper layer 170 of the second intermediate layer to correspond to the hole 151 formed on the lower layer 150 of the second intermediate layer so that the shield connector 181 can pass through the hole 151. Also, as shown in FIG. 10B, a hole 172 is formed on the upper layer 170 of the second intermediate layer to connect the metal layer 160 to the power.

The upper layer 170 of the second intermediate layer can be formed by the same method as forming the first intermediate layer.

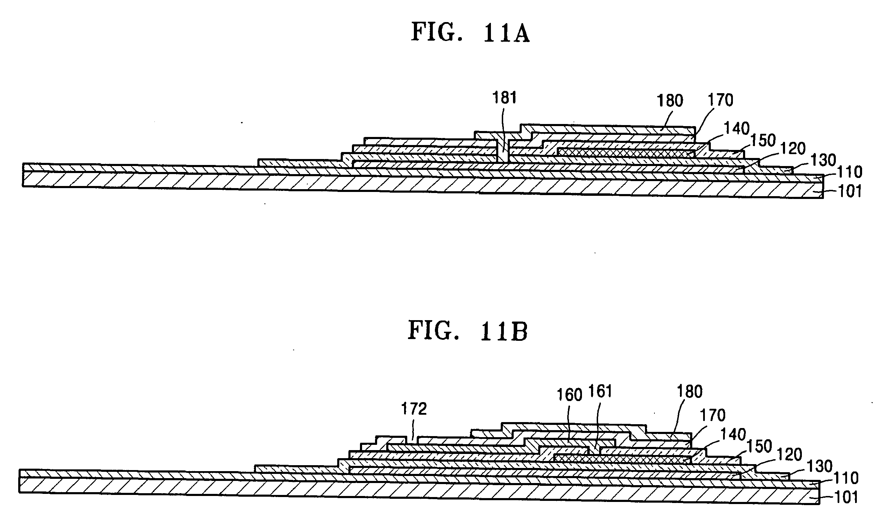

Then, as illustrated in FIGS. 11A and 11B, the second shield 180 is formed on the upper layer 170 of the second intermediate layer. Here, the shield connector 181 can be formed as illustrated in FIG. 11A and pass through the holes 131, 151, and 171 respectively formed on the first intermediate layer 130, and the lower and upper layers 150 and 170 of the second intermediate layers to connect the second shield 180 and the first shield 120.

The second shield 180 can be formed by the same method as the first shield 120.

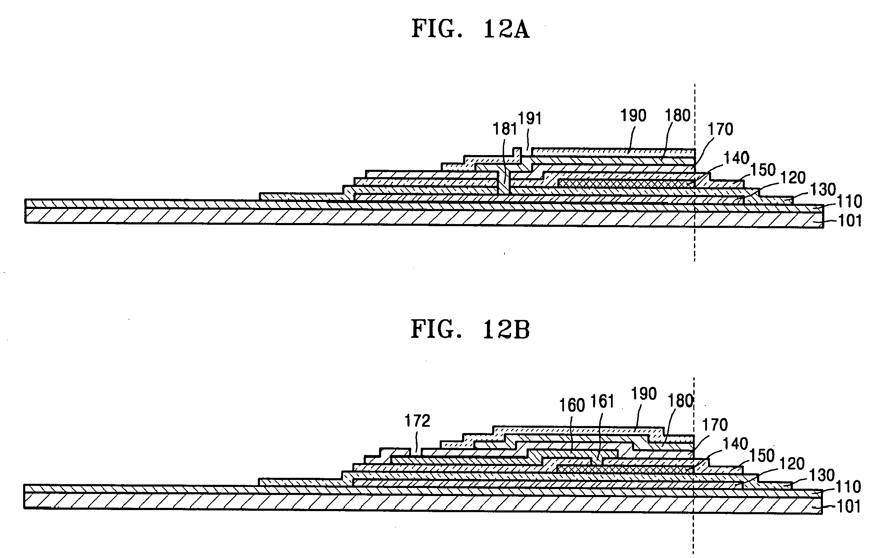

Next, the protective layer 190 is formed on the second shield as illustrated in FIGS. 12A and 12B. In FIG. 12A, the hole 191, through which the leading wire 201 to ground the second shield 180 passes, is formed on the protective layer 190.

The protective layer 190 can be formed by the same method as the first intermediate layer 120.

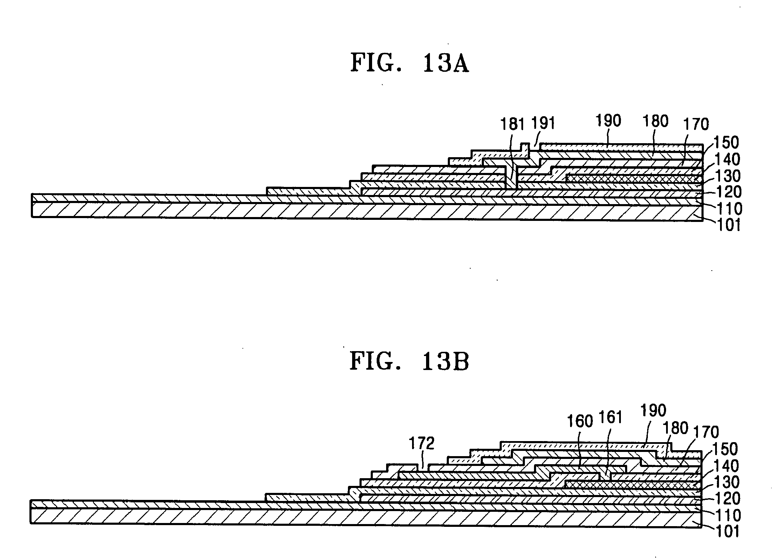

Then, the layers stacked to the present as illustrated in FIGS. 3A, 4A, 5A, 6A, 7A, 8A, 9A, 10A, 11A, and 12A, and FIGS. 3B, 4B, 5B, 6B, 7B, 8B, 9B, 10B, 11 B, and 12B are diced along the dotted lines illustrated in FIGS. 12A and 12B. As such, the sensor 140, the first shield 120, and the second shield 180 are exposed to the outside. Then, as illustrated in FIGS. 13A and 13B, the fabrication of the probe head 100 according to the present invention is completed.

According to a probe head configured as described above, by controlling the width of a surface of a sensor facing a recording medium, and the distance between the sensor and a first shield, and the sensor and a second shield, the resolving ability and sensitivity of the probe head can be simultaneously improved.

In addition, the probe head having high resolving ability and sensitivity can be manufactured easily.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A probe head comprising at least one sensor unit,
the sensor unit including:
a sensor for recording or reading data on or from a predetermined medium;
first and second shields disposed on both sides of the sensor at a predetermined distance from each other; and
first and second intermediate layers respectively interposed between the sensor and the first shield, and the sensor and the second shield.

2. The probe head of claim 1, wherein a surface of the sensor facing the recording medium is flat.

3. The probe head of claim 1 or 2, wherein the first and second shields are mutually connected.

4. The probe head of any preceding claim, wherein the sensor unit comprises:
a substrate which supports the sensor; and
an insulating layer which insulates a shield facing the substrate.

5. The probe head of any preceding claim, wherein the sensor unit comprises a protective layer which covers the second shield.

6. The probe head of any preceding claim, wherein the sensor unit comprises a metal layer which connects the sensor to a power source.

7. Use of the probe head of claim 3, wherein, when operating the probe head, one of the first shield or the second shield is grounded.

8. A method of fabricating a probe head, comprising:
providing a substrate;
forming an insulating layer on the substrate;
forming a first shield on the insulating layer;
forming a first intermediate layer on the first shield;
forming a sensor on the first intermediate layer;
forming a second intermediate layer on the sensor;
forming a second shield on the second intermediate layer; and
forming a protective layer on the second shield.

9. The method of claim 8, further comprising forming a metal layer which connects the sensor to a power source.

10. The method of claim 9, wherein the forming of the metal layer comprises:
forming the metal layer on the second intermediate layer; and
forming a third intermediate layer on the metal layer.

11. The method of claim 9, wherein the forming of the metal layer comprises:
forming a thin layer by depositing a predetermined metal on the second intermediate layer; and
patterning the thin layer.

12. The method of claim 11, wherein the forming of the thin layer by depositing the predetermined metal on the second intermediate layer is performed by electronic beam deposition or sputtering.

13. The method of claim 11 or 12, wherein the patterning of the thin layer is performed by reactive ion etching (RIE) or wet etching.

14. The method of any of claims 8 to 14, wherein the forming of the insulating layer is performed by thermal oxidation.

15. The method of claim 8, wherein the forming of the first shield and the forming of the second shield comprise:
forming a thin layer by depositing a predetermined metal; and
patterning the thin layer.

16. The method of claim 15, wherein the forming of the thin layer by depositing the predetermined metal is performed by electronic beam deposition or sputtering.

17. The method of claim 15 or 16, wherein the patterning of the thin layer is performed by RIE or wet etching.

18. The method of claim 8, wherein the forming of the first intermediate layer, the forming of the second intermediate layer, and the forming of the protective layer comprise:
forming a thin layer by depositing oxide or nitride; and
patterning the thin layer.

19. The method of claim 18, wherein the forming of the thin layer by depositing oxide or nitride is performed by plasma enhanced chemical vapor deposition (PECVD).

20. The method of claim 18, wherein the patterning of the thin layer is performed by RIE or wet etching.

21. The method of any of claims 8 to 20, wherein the forming of the sensor comprises:
forming a thin layer by deposing Poly-Si; and
patterning the thin layer.

22. The method of claim 21, wherein the forming of the thin layer by depositing Poly-Si is performed by low pressure chemical vapor deposition (LPCVD).

23. The method of claim 21, wherein the patterning of the thin film is performed by RIE or wet etching.

24. The method of claim 8, further comprising dicing the probe head so that the sensor, the first shield, and the second shield are exposed to the outside.
